# EUROPEAN PATENT APPLICATION

(11) **EP 3 539 830 A1**
(43) Date of publication of application: **18.09.2019**
(21) Application number: 19162061.6
(22) Date of filing: 12.03.2019
(51) Int. Cl.: B60R 16/02, H01B 13/012, B60R 13/08

(54) **WIRE HARNESS AND MANUFACTURING METHOD OF SHEET MATERIAL WITH WIRE HARNESS**

(30) Priority: 13.03.2018 JP 2018045875
(71) Applicant: YAZAKI CORPORATION, Minato-ku, Tokyo 108-8333 (JP)
(72) Inventor: HAMADA, Ryo, Susono-shi, Shizuoka 410-1194 (JP)
(74) Representative: Grünecker Patent- und Rechtsanwälte PartG mbB

(57) **Abstract**

A wire harness 1 to be fixed to a surface of a sheet material 40 in which a fiber material is exposed on the surface, the wire harness includes an electric wire 10 and a molding body 20 made of a thermoplastic material and provided integrally with the electric wire to be exposed on an outer surface of the electric wire. The molding body includes a fusion surface which fixes the electric wire to the surface of the sheet material through heating and fusing.

## Description

### BACKGROUND OF THE INVENTION

### <Field of the Invention>

The present invention relates to a wire harness fixed to a sheet material in which a fiber material exposed on a surface thereof, and a manufacturing method of a sheet material with a wire harness using the wire harness.

In the related art, a wire harness used for an automobile or the like generally includes a member (such as a corrugated tube) for protecting against external impact, and the like, a member (such as a tape) for bundling electric wires included in the wire harness, a member (such as a protector) for defining a wiring shape of the wire harness, and the like (see, for example, the patent document 1: JP-A-2015-080380, the patent document 2: JP-B 5920263, the patent document 3: JP-B 5939098, and the patent document 4: JP-B 5210463).

For example, in one of the wire harnesses in the related art, in order to improve the waterproof performance of a protective member formed by hot-pressing nonwoven fabric, a laminate formed by adding a waterproof sheet to nonwoven fabric is subjected to hot pressing to form a protective member (see, for example, the patent document 1).
[Patent Document 1] JP-A-2015-080380
[Patent Document 2] JP-B 5920263
[Patent Document 3] JP-B 5939098
[Patent Document 4] JP-B 5210463

When a wire harnesses including various members as described above are actually fixed to the vehicle body or the like to be wired therein, a fixing member such as a clip or the like is generally used. Here, as the number of the fixing members increases accompanied by complication or the like of the wiring shape of the wire harness, resulting in an increase in the cost (further, the manufacturing cost of the wire harness) required for the fixing member. In addition, it is rather complicated to attach numerous fixing members to the vehicle body or the like, whereby it is difficult to improve the efficiency of wiring of the wire harness.

### SUMMARY

One or more embodiments provide a wire harness capable of improving the efficiency of wiring of a wire harness and reducing a manufacturing cost, and a manufacturing method of a sheet material with a wire harness using the wire harness.

In order to achieve the above object, a wire harness according to one or more embodiments is characterized by (1) to (3) as follows.
(1) A wire harness to be fixed to a surface of a sheet material in which a fiber material is exposed on the surface, the wire harness includes an electric wire and a molding body made of a thermoplastic material and provided integrally with the electric wire to be exposed on an outer surface of the electric wire. The molding body includes a fusion surface which fixes the electric wire to the surface of the sheet material through heating and fusing.
(2) The molding body has at least one of a first function as a member which bundles the electric wire, and a second function as a member which defines a wiring shape of the electric wire.
(3) The molding body is made of a hot melt material as the thermoplastic material.

According to the wire harness having the configuration of (1) described above, the electric wire can be heated and fused to the sheet material using the molding body itself provided integrally with the electric wire. In other words, the wire harness can be fixed to the sheet material without using a fixing member such as a clip. More specifically, at the time of heating and fusing, the fusion surface of the molding body is melted to enter between the fibers of the fiber material exposed on the surface of the sheet material, so that the thermoplastic material that forms the fusion surface and the fiber material are cooled and solidified in a mixed state. As a result, the fusion surface of the molding body and the surface of the sheet material are integrated with each other, and the wire harness can be fixed to any part of the sheet material with sufficient strength without using a fixing member such as a clip.

Therefore, the wire harness having the configuration described above can improve the efficiency of wiring of the wire harness and reduce the manufacturing cost.

According to the wire harness having the configuration of (2) described above, the molding body provided in the wire harness has not only the function as the fixing member described above, but also at least one of a function as a member that bundles the electric wire and a function as a member that defines the wiring shape of the electric wire. As a result, since it is unnecessary to provide another member (such as a tape) for bundling the electric wire or another member (such as a protector) for defining the wiring shape, the manufacturing cost of the wire harness can be further reduced.

According to the wire harness having the configuration of (3) described above, a hot melt material (for example, a material mainly composed of ethylene vinyl acetate, polypropylene, polyamide, synthetic rubber, or the like) is used as the thermoplastic material that forms the molding body. Specifically, it is possible to mold the molding body by placing a mold to cover the electric wire and injecting the molten hot melt into the mold. Since such a molding body can be easily melted using a hot air heater or the like, it is easy to improve the efficiency of heating and fusing the molding body to the sheet material.

In order to achieve the above object, a manufacturing method of a sheet material with a wire harness according to one or more embodiments is characterized by (4) and (5) as follows.
(4) A manufacturing method of a sheet material with a wire harness includes arranging the wire harness according to any one of (1) to (3) described above so that the molding body of the wire harness is interposed between a pair of sheet materials, and hot pressing at least a portion of the pair of sheet materials corresponding to the molding body, and fixing the electric wire of the wire harness to at least one of the pair of sheet materials by heating and fusing the molding body.
(5) The wire harness is formed so that the molding body is provided integrally with the electric wire to correspond to at least one of, between the pair of sheet materials, a first portion at which a routing path of the electric wire branches, a second portion at which the routing path bends, and a third portion at which the electric wire goes in and out between an area interposed between the pair of sheet materials and an area outside the pair of sheet materials.

According to the manufacturing method of the sheet material with the wire harness having the configuration of (4) described above, it is possible to produce the sheet material with the wire harness, in which the electric wire is heated and fused to at least one of the pair of interposed sheet materials to be fixed in a state of being interposed between the pair of sheet materials using the molding body itself provided integrally with the electric wire. In other words, the wire harness can be fixed to the pair of sheet materials without using a fixing member such as a clip. If necessary, for example, a layer made of a thermoplastic material may be provided on a surface of one of the pair of sheet materials in advance, and thus the pair of sheet materials can be fused to each other upon hot pressing described above at an area except the portion disposed with the molding body. In addition, the molding body may be disposed on the mating surfaces of the two sheet materials separated from each other, or may be disposed on the mating surface formed by bending one shared sheet material.

Therefore, according to the manufacturing method of the sheet material with the wire harness having the configuration described above, it is possible to improve the efficiency of wiring of the electric wire of the wire harness between the pair of sheet materials and to reduce the manufacturing cost of the sheet materials.

According to the manufacturing method of the sheet material with the wire harness having the configuration of (5) described above, the electric wire is maintained by the molded bodies fixed on the sheet material through the heating and fusing at particularly desired portions for maintaining the shape of the electric wire (the shape along the wiring path), such as a branch point and bending point of the wiring path, and the boundary point for dividing the inside and outside of the area interposed between the pair of sheet materials.

According to one or more embodiments, it is possible to provide a wire harness capable of improving the efficiency of wiring of a wire harness and reducing a manufacturing cost, and a manufacturing method of a sheet material with a wire harness using the wire harness.

The present invention has been briefly described above. Furthermore, the details of the present invention will be further clarified by reading through the aspects for carrying out the invention described below with reference to the accompanying drawings.

### BRIEF DESCRIPTION OF THE DRAWINGS

Figs. 1A to 1C are perspective views for describing a process of molding a molding body of a wire harness according to a first embodiment of the present invention;
Fig. 2A is a perspective view illustrating a state where the wire harness illustrated in Fig. 1C is fixed to a sheet material, and Fig. 2B is a main cross-sectional view taken along an axial direction of the wire harness illustrated in Fig. 2A;
Fig. 3 is a perspective view illustrating a state where the wire harness is maintained in a complicated planar shape by providing molded bodies at a plurality of attachment portions in the axial direction of the electric wire which maintain the attachment portions in different wiring shapes;
Fig. 4 is a view for describing a configuration and an assembling outline of a sound insulating material with a wire harness by using a wire harness according to a second embodiment of the present invention;
Fig. 5A is a (partially transparent) perspective view illustrating a state after assembling of the sound insulating material with the wire harness illustrated in Fig. 4, and Fig. 5B is a cross-sectional view of a portion where a molding body is located in the sound insulating material with the wire harness illustrated in Fig. 5A; and
Fig. 6 is a (partially transparent) perspective view illustrating a portion where a molding body is located in a sound insulating material with a wire harness using a wire harness according to a third embodiment of the present invention.

### DETAILED DESCRIPTION

### <First Embodiment>

Hereinafter, a wire harness 1 according to a first embodiment of the present invention will be described with reference to the drawings. Typically, the wire harness 1 is wired and fixed to an interior part (for example, a door trim, a roof trim, and a floor carpet) of a vehicle to be used.

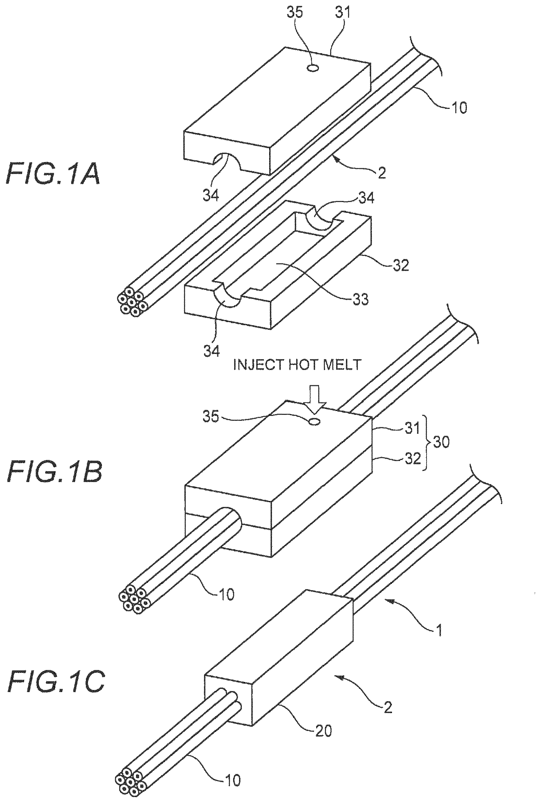

As illustrated in Fig. 1C, the wire harness 1 includes an electric wire bundle 10 and a molding body 20 provided integrally with an attachment portion 2 that is a part of the electric wire bundle 10 in an axial direction. In the example illustrated in Fig. 1C, the electric wire bundle 10 includes a plurality of electric wires only. However, if necessary, the electric wire bundle 10 may include the electric wires and another member (for example, a tubular member such as a corrugated tube or the like covering an outer circumference of the electric wire).

The molding body 20 is made of a thermoplastic material and provided integrally with the attachment portion 2 of the electric wire bundle 10 to be exposed on an outer surface of the attachment portion 2 of the electric wire bundle 10. In the example illustrated in Fig. 1C, the molding body 20 covers the entire outer circumference of the attachment portion 2 to surround the linear attachment portion 2 of the electric wire bundle 10 in a circumferential direction. Therefore, the molding body 20 has a function as a member for bundling the attachment portion 2 of the electric wire bundle 10 and a function as a member for defining (regulating and maintaining) the wiring shape of the attachment portion 2 of the electric wire bundle 10 in the linear shape. The molding body 20 has an extended shape (linear shape in the example illustrated in Fig. 1C) that corresponds to the wiring shape of the attachment portion 2 of the electric wire bundle 10.

As illustrated in Figs. 1A to 1C, the molding body 20 is molded using a mold (die) 30 including an upper mold 31 and a lower mold 32. Each of the upper mold 31 and the lower mold 32 has an extended shape (linear shape in the example illustrated in Figs. 1A and 1B) that corresponds to the wiring shape of the attachment portion 2 of the electric wire bundle 10. Each of the upper mold 31 and the lower mold 32 is formed with a recessed portion 33 as a molding space at a central portion in an extending direction, and a recessed portion 34 for holding the electric wire bundle 10 at both ends in the extending direction.

As illustrated in Fig. 1A, the attachment portion 2 of the electric wire bundle 10 is clamped, by the upper mold 31 and the lower mold 32 disposed vertically to face each other so that the recessed portions 33 face each other, to be interposed vertically between the upper mold 31 and the lower mold 32 while holding the wire bundle 10 with the recessed portions 34. In the clamped state, as illustrated in Fig. 1B, the electric wire bundle 10 is extended out through substantially circular openings each formed with the recessed portions 34 vertically facing each other, and the wiring shape of the attachment portion 2 of the electric wire bundle 10 is maintained in a desired shape (linear shape in the example illustrated in Fig. 1B). Inside the mold 30, one molding space formed with the vertically-facing recessed portions 33 is formed around the attachment portion 2 of the electric wire bundle 10.

With the clamped state as described above, a thermoplastic material (in this example, a hot melt material) melted at a high temperature is injected and filled into the molding space through an injection port 35 formed in the upper mold 31, as illustrated in Fig. 1B. Thereafter, the hot melt material is cooled and hardened (by injection molding or cast molding). After hardening of the hot melt material, the mold 30 is separated from the attachment portion 2 of the electric wire bundle 10. As a result, as illustrated in Fig. 1C, molding of the molding body 20 is completed.

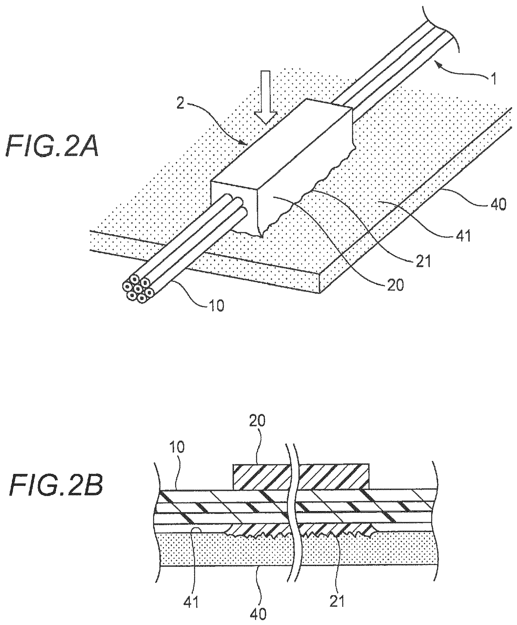

As illustrated in Figs. 2A and 2B, the wire harness 1 is fixed to a surface 41 of a sheet material 40 such as nonwoven fabric. A fiber material is exposed on the surface 41. When the wire harness 1 is wired in a vehicle, a door trim, a roof trim, a floor carpet, and the like are exemplified as the sheet material 40.

As illustrated in Fig. 2A, fixing the wire harness 1 to the sheet material 40 is achieved by fusing a fusion surface 21 (flat surface) of the molding body 20 made of a hot melt material to the surface 41 of the sheet material 40. Specifically, after locally heating and melting the fusion surface 21 using a hot air heater or the like, the fusion surface 21 of the molding body 20 is pressed against the sheet material 40, and in this state, the hot melt material constituting the fusion surface 21 is cooled and solidified.

In the state where the fusion surface 21 is fused to the surface 41 of the sheet material 40, as illustrated in Fig. 2B, the molten hot melt material enters between the fibers of the fiber material exposed on the surface 41 of the sheet material 40, so that the hot melt material and the fiber material are present in a mixed state. Therefore, the fusion surface 21 (that is, the wire harness 1) of the molding body 20 can be fixed to the surface 41 of the sheet material 40 with sufficient strength.

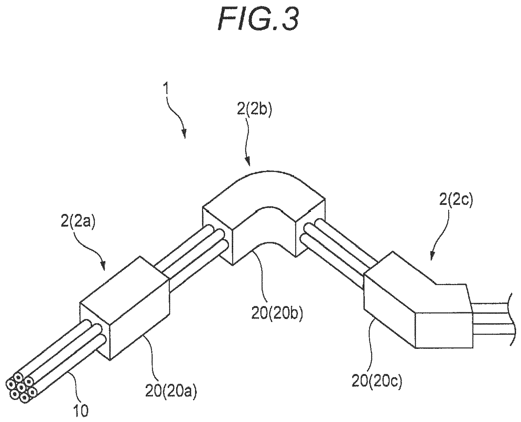

Further, as illustrated in Fig. 3, the molding body 20 may be provided on each of a plurality of attachment portions 2 in the axial direction of the electric wire bundle 10. In the example illustrated in Fig. 3, for each of the plurality of attachment portions 2, a molding body 20 is provided to maintain the plurality of attachment portions 2 in different wiring shapes, so that the wire harness 1 is maintained in a complicated planar shape.

Specifically, an attachment portion 2a of the electric wire bundle 10 is provided with a molding body 20a that maintains the wiring shape of the attachment portion 2a in a linear shape, an attachment portion 2b, which is formed apart from the attachment portion 2a of the electric wire bundle 10 to one side in the axial direction, is provided with a molding body 20b to maintain the wiring shape of the attachment portion 2b in a shape bent at a right angle, and an attachment portion 2c, which is formed apart from the attachment portion 2b of the electric wire bundle 10 to one side in the axial direction, is provided with a molding body 20c to maintain the wiring shape of the attachment portion 2c in a shape bent at an obtuse angle. All these molded bodies 20a to 20c may be fused to the sheet material 40 or only some of these molded bodies 20a to 20c may be fused to the sheet material 40.

Each of the molded bodies 20a, 20b and 20c illustrated in Fig. 3 is molded on the outer circumferential surface of the corresponding attachment portion such that one mold 30 is selected which corresponds to the wiring shape of one among the attachment portions 2a, 2b and 2c of the wire bundle 10 from a plurality of types of molds 30, the selected mold 30 is arranged by determining the position and angle thereof based on a planar shape to be realized finally, and then a hot melt material is injected into the mold 30 and hardened. As a result, since the molding body 20 can be disposed only on the plurality of attaching portions 2 (in other words, it is possible to dispose the molding body 20 as much as is necessary at the minimum) of the electric wire bundle 10, it is possible to manufacture the wire harness 1 that can maintain any three-dimensional shape while avoiding an increase in size of the wire harness 1.

As described above, with the wire harness 1 according to the embodiment of the present invention, it is possible to fuse the electric wire bundle 10 to the sheet member 40 by using the molding body 20 which is provided integrally with the electric wire bundle 10 and made of a thermoplastic material. In other words, unlike the wire harness of the related art, the wire harness 1 can be fixed to the sheet material 40 without using a fixing member such as a clip. At the time of fusing, the molten thermoplastic material enters between the fibers of the fiber material exposed on the surface 41 of the sheet material 40 to be cooled and solidified in that state. Therefore, the wire harness 1 can be fixed to any part of the sheet material 40 with sufficient strength without using a fixing member such as a clip.

Accordingly, the wire harness 1 can improve the efficiency of wiring work and reduce the manufacturing cost.

The molding body 20 provided in the wire harness 1 serves not only as a fixing member, but also as a member for bundling the electric wire bundle 10 and a member for defining the wiring shape of the electric wire bundle 10. As a result, it is unnecessary to use a tape for binding, a protector for wiring, or the like, so that the manufacturing cost can be further reduced.

A hot melt material is used as the thermoplastic material constituting the molding body 20. Therefore, for example, the electric wire bundle 10 can be placed in the mold 30 and the molding body 20 can be injection-molded or cast-molded using the molten hot melt material. In addition, since the molding body 20 can be easily melted using a hot air heater or the like after molding, it is easy to improve the efficiency of fusing the molding body 20 to the sheet material 40.

### <Second Embodiment>

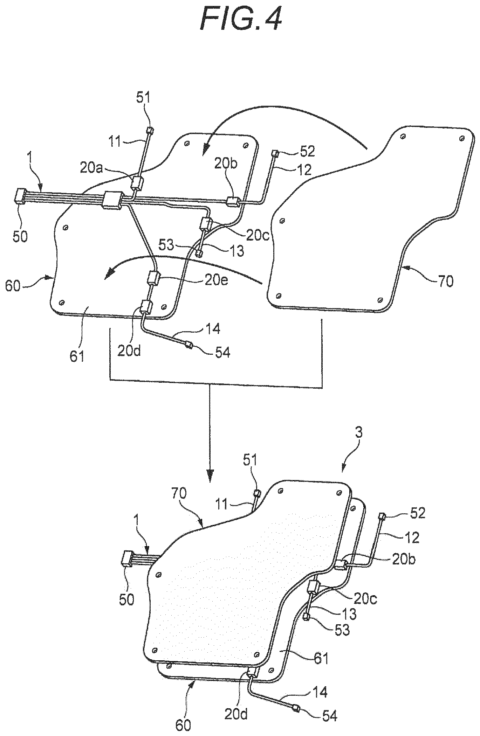

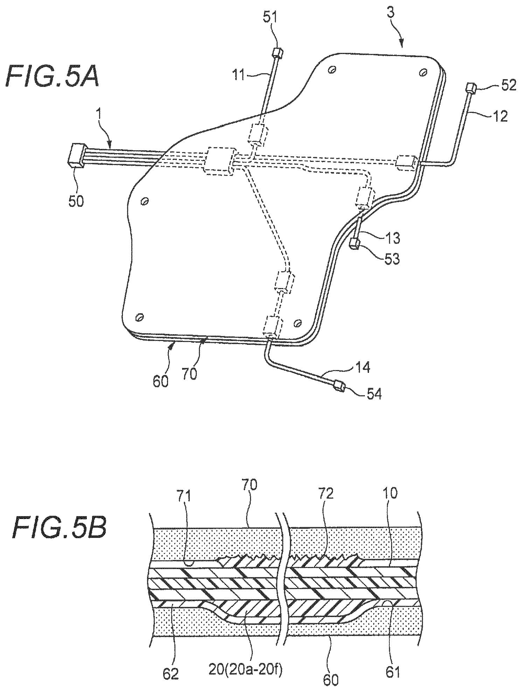

Next, a sound insulating material 3 with a wire harness manufactured using a wire harness 1 according to a second embodiment of the present invention will be described with reference to Figs. 4 and 5A and 5B.

The sound insulating material 3 with a wire harness according to the present embodiment is installed inside a door of an automobile. As illustrated in Figs. 4 and 5A and 5B, the sound insulating material 3 with a wire harness includes a strength maintaining sheet 60 having a predetermined strength and flexibility, a sound absorbing sheet 70 which is lower in strength than the strength maintaining sheet 60 but higher in sound insulating properties and heat insulating properties, and the wire harness 1 interposed between a mating surface 61 of the strength maintaining sheet 60 and a mating surface 71 (see Fig. 5B) of the sound absorbing sheet 70.

The strength maintaining sheet 60 is a resin sheet having strength necessary for maintaining the wire harness 1 and is a thinner sheet than the sound absorbing sheet 70. Examples of the material of the strength maintaining sheet 60 include polypropylene (PP), vinyl chloride and polyethylene (PE), and the like. In addition, if necessary, an electromagnetic shielding film (a conductive film, a metal foil, a composite film obtained by laminating a metal foil with a resin film, and the like) may be attached onto the surface of the sheet.

The sound absorbing sheet 70 is made of the nonwoven fabric described in the first embodiment, a foamed body (for example, a foamed body in which paper, cornstarch or the like is mixed in PP) prepared by adjusting materials so as to enhance sound and heat insulating properties, urethane having an increased expansion ratio, or the like. For any material that may be used, an uneven structure corresponding to the fiber material described in the first embodiment is exposed on the surface of the sound absorbing sheet 70. In this way, when components, foaming specifications, and the like are adjusted to enhance sound and heat insulating properties, it is highly likely to decrease in strength and is likely to break.

In this example, a thin film 62 made of a thermoplastic material (typically a hot melt material) is preliminarily coated on the entire region of the mating surface 61 of the strength maintaining sheet 60 (see Fig. 5B). Not only the entire region of the mating surface 61 of the strength maintaining sheet 60, but also the entire region of the mating surface 71 of the sound absorbing sheet 70 may be coated with a film similar to the thin film 62 as necessary.

The wire harness 1 includes an electric wire 10 and molded bodies 20 (20a to 20f) provided at a plurality of portions in the axial direction of the electric wire 10, respectively. The electric wire 10 refers to a set of electric wires, in which a base end portion is attached with a connector 50 and the distal end side thereof branches into a plurality of branch wires, wherein connectors 51 to 54 are attached to distal ends of the branch wires 11 to 14, respectively. For the electric wire 10, a flat cable may be used which is formed by arranging a plurality of same-diameter conductors in parallel at equal intervals, coating the conductors with a coating portion formed of an insulator, respectively, and integrating adjacent coating portions at the connecting portions formed of an insulator to form a flat shape.

Similarly to the first embodiment, each of the molded bodies 20 (20a to 20f) is made of a thermoplastic material (typically, a hot melt material) and provided integrally with the electric wire 10 to be exposed on the outer surface of the electric wire 10. The configuration, manufacturing method, and the like of each molding body 20 are the same as those of the first embodiment described above, and accordingly, a detailed description will not be redundantly repeated.

As illustrated in Fig. 5A, in the sound insulating material 3 with a wire harness, a laminate is formed by superposing the mating surface 61 of the strength maintaining sheet 60 and the mating surface 71 of the sound absorbing sheet 70 to adhere to each other, and interposing the wire harness 1 between the mating surfaces 61 and 71. Terminal portions of the branch wires 11 to 14 of the wire harness 1 are drawn out from the outer peripheral edges of the two sheets 60 and 70.

The molded bodies 20a to 20d are respectively interposed between the two sheets 60 and 70 at positions near the outer peripheral edges of the two sheets 60 and 70 from which the branch wires 11 to 14 are drawn out (in other words, at portions through which the electric wire 10 goes in and out between the area interposed between the two sheets 60 and 70 and the outside area). The molding body 20e is interposed between the two sheets 60 and 70 at a position near a portion where the extending direction of the branch wire 14 changes (in other words, a place where the wiring path of the electric wire 10 bends). The molding body 20f is interposed between the two sheets 60 and 70 at a position near a branch portion where the electric wire 10 branches into the branch wires 11 to 14 (in other words, a portion where the wiring path of the electric wire 10 branches). As described above, the molded bodies 20 (20a to 20f) are provided at a plurality of places of the electric wire 10, respectively, to maintain the wiring shape of the wire harness 1 (the electric wire 10) in a desired shape.

When manufacturing the sound insulating material 3 with a wire harness, as illustrated in Fig. 4, the wire harness 1 (that is, the electric wire 10 and the molding body 20) which is manufactured in advance is placed on the mating surface 61 of the strength maintaining sheet 60 to have a desired shape and arrangement.

Next, the sound absorbing sheet 70 is laminated on the mating surface 61 of the strength maintaining sheet 60 to interpose the wire harness 1 between the mating surfaces 61 and 71 of the sheets 60 and 70. In this state, a so-called hot press machine or the like is used to compress the two laminated sheets 60 and 70 in the laminating direction while heating the laminated two laminated sheets 60 and 70.

As a result, the molded bodies 20 (20a to 20f) made of a thermoplastic material and the thin film 62 made of the thermoplastic material formed on the mating surface 61 of the strength maintaining sheet 60 are heated and melted, and then cooled and solidified, so that the wire harness 1 including the molded bodies 20 (20a to 20f) is fused to the mating surfaces 61 and 71 of the two sheets 60 and 70.

As illustrated in Fig. 5B, in a state where the surface (fusion surface 21) of the molded bodies 20 (20a to 20f) on the side of the sound absorbing sheet 70 is fused to the mating surface 71 of the sound absorbing sheet 70, the molten hot melt material enters into the uneven structures 72 which are exposed on the mating surface 71 of the sound absorbing sheet 70. Therefore, the fusion surface 21 of the molded bodies 20 (20a to 20f) can be fixed to the mating surface 71 of the sound absorbing sheet 70 with sufficient strength. In addition, the surface of the molded bodies 20 (20a to 20f) on the side of the strength maintaining sheet 60 can also be fixed to the mating surface 61 of the strength maintaining sheet 60 with sufficient strength through the melted and cooled thin film 62. Further, the electric wire 10 at the portion not provided with the molding body 20 in the wire harness 1 can also be fixed to the mating surface 71 of the sound absorbing sheet 70 with sufficient strength through the melted and cooled thin film 62.

In this way, it is possible to complete the sound insulating material 3 with a wire harness as illustrated in Fig. 5A. As described above, the wire harness 1 is interposed between the strength maintaining sheet 60 and the sound absorbing sheet 70 to be integrated with the strength maintaining sheet 60 and the sound absorbing sheet 70.

As described above, the contours of the outer peripheral edges of the strength maintaining sheet 60 and the sound absorbing sheet 70 may be formed to conform to each other, but the contour of the outer peripheral edge of the strength maintaining sheet 60 may be formed slightly inside the contour of the outer peripheral edge of the sound absorbing sheet 70.

The sound insulating material 3 with a wire harness configured as described above is installed between the door panel and the door trim of the automobile, whereby the sound insulating material 3 with a wire harness can be easily embedded into the door. At that time, the sound insulating material 3 with a wire harness may be attached to the back (inner surface) of the door trim, and the door trim may be fixed to the door panel.

As described above, according to the sound insulating material 3 with a wire harness including the wire harness 1, since the portions near the terminals of the branch wires 11 to 14 of the wire harness 1 are fixed to the sound absorbing sheet 70 at the molded bodies 20 (20a to 20d), the molded bodies 20 (20a to 20d) can accept the tension when pulling out the terminal portions of the branch wires 11 to 14 which are drawn out of the strength maintaining sheet 60 and the sound absorbing sheet 70. As a result, breakage of the sound insulating material 3 with a wire harness can be prevented.

In addition, the wire harness 1 can be wired and fixed in position by fixing the wire harness 1 with the molded bodies 20 (20a to 20f). Therefore, it is unnecessary to position the wire harness 1 with additional positioning unit, thereby saving labor and reducing the number of processing steps.

Since the wire harness 1 is integrated with the strength maintaining sheet 60 and the sound absorbing sheet 70, it is possible to reduce the number of the attachment portions of the wire harness 1 and the supporting portions for the wire harness 1, compared with the case where the wire harness 1 is wired alone. Therefore, it is possible to facilitate thinning and weight saving of a part (the door of the automobile) where the wire harness 1 is installed and also contribute to cost reduction. In addition, unlike the example of separately assembling the wire harness and the sound insulating sheet on the door trim, the assemblability can be improved so that the length of the assembly line can be shortened.

### <Third Embodiment>

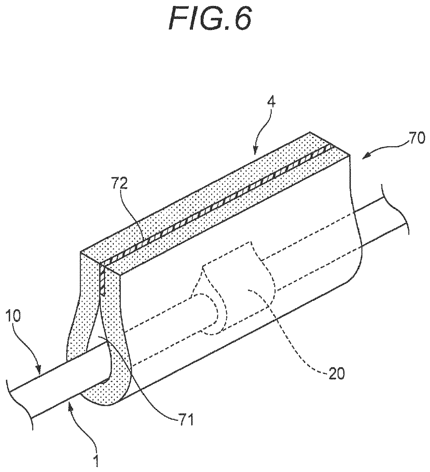

Next, a sound insulating material 4 with a wire harness manufactured using a wire harness 1 according to a third embodiment of the present invention will be described with reference to Fig. 6.

While the wire harness 1 (the electric wire 10 combined with the molding body 20) is fixed by being interposed between the two sheets 60 and 70 in the sound insulating material 3 with a wire harness according to the second embodiment described above, the wire harness 1 (the electric wire 10 combined with the molding body 20) is fixed by being interposed between one sound absorbing sheet 70 folded in half in the sound insulating material 4 with a wire harness according to the third embodiment. In the example illustrated in Fig. 6, a thin film 72 made of a thermoplastic material (typically, a hot melt material) is preliminarily coated on one of mating surfaces 71 at an end portion in a folding direction of the sound absorbing sheet 70. The thin film 72 may be preliminarily coated on both of the mating surfaces 71 at the end portions in the folding direction of the sound absorbing sheet 70.

When manufacturing such a sound insulating material 4 with a wire harness, first, the wire harness 1 (that is, the electric wire 10 combined with the molding body 20) manufactured in advance is placed on the upper surface 71 (mating surface) of one sound absorbing sheet 70 to have a desired shape and arrangement.

Next, the sound absorbing sheet 70 is folded in half, and the wire harness 1 is interposed between the mating surfaces 71 of the sound absorbing sheet 70. In this state, a so-called hot press machine or the like is used to compress the folded one sound absorbing sheet 70 while heating.

As a result, the molding body 20 made of the thermoplastic material and the thin film 72 made of the thermoplastic material formed on the mating surface 71 of the end portion of the sound absorbing sheet 70 are heated and melted, and then cooled and solidified, so that the molding body 20 of the wire harness 1 is fused to the mating surfaces 71 of the sound absorbing sheet 70 folded in half.

In this way, it is possible to complete the sound insulating material 4 with a wire harness as illustrated in Fig. 6. As described above, the wire harness 1 is integrated with the sound absorbing sheet 70 by being interposed between one sound absorbing sheet 70 folded in half.

### <Other Embodiments>

The present invention is not limited to the above embodiments, and various modifications can be adopted within the scope of the present invention. For example, the present invention is not limited to the embodiment described above, but may include modifications or improvements, as appropriate. In addition, materials, shapes, dimensions, numbers, positions, and the like of the constituent elements in the embodiments described above are not limited, but rather arbitrary as far as the present invention can be achieved.

For example, in each of the embodiments described above, a hot melt material is used as the thermoplastic material constituting the molding body 20, but any thermoplastic material may be used as long as it enables the fusion surface 21 of the molding body 20 to be fused to the surface 41 of the sheet material 40.

Further, the first embodiment illustrates that the molding body 20 covers the entire outer circumference of the attachment portion 2 of the electric wire bundle 10. On the other hand, the molding body 20 may be provided only on a portion of the outer circumference of the attachment portion 2 of the electric wire bundle 10. In this case, the molding body 20 does not have a function as a member for bundling the attachment portion 2 of the electric wire bundle 10, but has a function as a member for defining the wiring shape of the attachment portion 2 of the electric wire bundle 10. Further, the molding body 20 may cover the entire outer circumference of the attachment portion 2 having a very small length in the axial direction. In this case, the molding body 20 has a function as a member for bundling the attachment portion 2 of the electric wire bundle 10, but does not have a function as a member for defining the wiring shape of the attachment portion 2 of the electric wire bundle 10.

The features of the wire harness 1 and the manufacturing method of a sheet material with a wire harness according to the present invention described above will be summarized briefly as following (1) to (5).
(1) A wire harness (1) to be fixed to a surface (41) of a sheet material (40) in which a fiber material is exposed on the surface (41), the wire harness comprising:
   an electric wire (10); and
   a molding body (20) made of a thermoplastic material and provided integrally with the electric wire (10) to be exposed on an outer surface of the electric wire (10),
   wherein the molding body (20) includes a fusion surface (21) which fixes the electric wire (10) to the surface (41) of the sheet material (40) through heating and fusing.
(2) The wire harness (1) according to (1) described above,
   wherein the molding body (20) has at least one of a first function as a member which bundles the electric wire (10), and a second function as a member which defines a wiring shape of the electric wire (10).
(3) The wire harness (1) according to (1) or (2) described above,
   wherein the molding body (20) is made of a hot melt material as the thermoplastic material.
(4) A manufacturing method of a sheet material with a wire harness comprising:
   arranging the wire harness (1) according to any one of (1) to (3) described above so that the molding body (20) of the wire harness is interposed between a pair of sheet materials (60 and 70); and
   hot pressing at least a portion of the pair of sheet materials corresponding to the molding body and fixing the electric wire (10) of the wire harness to at least one (70) of the pair of sheet materials by heating and fusing the molding body (20).
(5) The manufacturing method according to (4),
   wherein the wire harness (1) is formed so that the molding body (20) is provided integrally with the electric wire to correspond to at least one of, between the pair of sheet materials, a first portion (corresponding to 20f) at which a routing path of the electric wire (10) branches, a second portion (corresponding to 20e) at which the routing path bends, and a third portion (corresponding to 20a, 20b, 20c, and 20d) at which the electric wire goes in and out between an area interposed between the pair of sheet materials and an area outside the pair of sheet materials.

### [Description of Reference Numerals and Signs]

1: Wire harness
3: Wire harness sound insulating material (sheet material with wire harness)
4: Wire harness sound insulating material (sheet material with wire harness)
10: Electric wire bundle (electric wire)
20: Molding body
40: Sheet material
41: Surface
60: Strength maintaining sheet (sheet material)
70: Sound absorbing sheet (sheet material)

## Claims

1. A wire harness to be fixed to a surface of a sheet material in which a fiber material is exposed on the surface, the wire harness comprising:
an electric wire; and
a molding body made of a thermoplastic material and provided integrally with the electric wire to be exposed on an outer surface of the electric wire,
wherein the molding body includes a fusion surface which fixes the electric wire to the surface of the sheet material through heating and fusing.

2. The wire harness according to claim 1,
wherein the molding body has at least one of a first function as a member which bundles the electric wire, and a second function as a member which defines a wiring shape of the electric wire.

3. The wire harness according to claim 1 or 2,
wherein the molding body is made of a hot melt material as the thermoplastic material.

4. A manufacturing method of a sheet material with a wire harness comprising:
arranging the wire harness according to any one of claims 1 to 3 so that the molding body of the wire harness is interposed between a pair of sheet materials; and
hot pressing at least a portion of the pair of sheet materials corresponding to the molding body, and fixing the electric wire of the wire harness to at least one of the pair of sheet materials by heating and fusing the molding body.

5. The manufacturing method according to claim 4,
wherein the wire harness is formed so that the molding body is provided integrally with the electric wire to correspond to at least one of, between the pair of sheet materials, a first portion at which a routing path of the electric wire branches, a second portion at which the routing path bends, and a third portion at which the electric wire goes in and out between an area interposed between the pair of sheet materials and an area outside the pair of sheet materials.
